# EUROPEAN PATENT SPECIFICATION

(11) **EP 3 296 609 B1**
(45) Date of publication and mention of the grant of the patent: **23.02.2022**
(21) Application number: 16792379.6
(22) Date of filing: 11.05.2016
(51) Int. Cl.: F16L 59/147, B63B 25/16, F16L 53/00, F16L 59/075, F17C 13/10, F16L 59/065, F16L 59/14, F16L 9/00, F16L 9/18, F16L 53/75

(54) **SHIP PROVIDED WITH PIPING FOR DISPOSING OF LIQUID HYDROGEN**
SCHIFF MIT LEITUNGSSYSTEM ZUR ENTSORGUNG VON FLÜSSIGEM WASSERSTOFF
NAVIRE DOTÉ D'UNE CANALISATION POUR ÉVACUER DE L'HYDROGÈNE LIQUIDE

(30) Priority: 11.05.2015 JP 2015096148
(43) Date of publication of application: 21.03.2018
(73) Proprietor: Kawasaki Jukogyo Kabushiki Kaisha, Kobe-shi, Hyogo 650-8670 (JP)
(72) Inventor: SUZUKI, Tomomi, Kobe-shi, Hyogo 650-8670 (JP); UNNO, Shuntaro, Hyogo 673-8666 (JP); TAKASE, Tomonori, Hyogo 673-8666 (JP); UMEMURA, Tomoaki, Hyogo 673-8666 (JP); OYAMA, Suguru, Hyogo 673-8666 (JP)
(74) Representative: Dehns
(86) International application number: PCT/JP2016/002305
(87) International publication number: WO 2016/181650

(56) References cited:
- WO-A1-2011/032556
- WO-A1-2014/203530
- JP-A- H09 277 999
- JP-A- H10 220 681
- JP-A- S60 192 198
- JP-A- 2002 295 729
- JP-B1- S4 836
- JP-U- S53 132 608
- US-A- 4 154 446
- US-A1- 2010 313 987

## Description

### Technical Field

The present invention relates to a ship including piping for disposing of liquid hydrogen stored in a tank over the ocean.

### Background Art

When an emergency such as stranding or flooding occurs to a low-temperature liquefied gas carrier that transports a low-temperature liquefied gas such as LNG, it is sometimes the case that the low-temperature liquefied gas stored in a tank is disposed of over the ocean. In such a case, disposal piping is attached to the carrier, and the low-temperature liquefied gas is disposed of over the ocean through the piping.

Patent Literatures 1 and 2 each disclose piping for a low-temperature liquefied gas. The piping of Patent Literature 1 has a single-pipe structure whose outer periphery is covered with urethane foam. The piping of Patent Literature 2 has a double-pipe structure including: an inner pipe, in which the low-temperature liquefied gas flows; and an outer pipe for forming a vacuum layer in a gap that is formed between the inner pipe and the outer pipe in the radial direction.

EP 3012510 discloses a liquefied gas storage tank which includes a system for releasing liquid hydrogen boil off gas from the tank through a relief passage.

### Citation List

### Patent Literature

PTL 1: Japanese Laid-Open Patent Application Publication No. 2002-295729
PTL 2: Japanese Laid-Open Patent Application Publication No. S60-192198

### Summary of Invention

### Technical Problem

In recent years, the use of a hydrogen fuel, which is an environmentally friendly fuel, is being pursued as an alternative energy to natural gas. Similar to conventional fuels such as natural gas, the hydrogen fuel is also transported in a liquid state by a low-temperature liquefied gas carrier. While the liquid hydrogen is being disposed of through disposal piping, the outer peripheral part of the disposal piping is cooled down by the liquid hydrogen flowing therein to near the temperature of the liquid hydrogen (-253°C). Even if highly thermally insulated piping, such as one disclosed in Patent Literature 1 or 2, is used, at least the distal end of the outer peripheral part of the piping is cooled down to near the temperature of the liquid hydrogen. This temperature is lower than the freezing points of nitrogen and oxygen, which are constituents of air. For this reason, at least at the distal end of the outer peripheral part of the piping, external air coming into contact with the piping is cooled down and solidified. If the resulting solid air blocks up the distal end of the outer peripheral part of the piping, there is a risk that the disposal of the liquid hydrogen may be hindered.

An object of the present invention is to, in a ship including piping for disposing of liquid hydrogen over the ocean, suppress blocking of the distal end of the outer peripheral part of the piping by solid air.

### Solution to Problem

In order to solve the above-described problems, a ship according to one aspect of the present invention is a ship comprising a tank, for storing liquid hydrogen as a cargo, characterised in that the ship comprises: a cargo pump installed in the tank; and piping for transferring the liquid hydrogen sucked up by the cargo pump to a point over the ocean and disposing of the liquid hydrogen over the ocean, wherein the piping includes an outer peripheral part that contacts external air, and either i) the piping comprises an area of contact between a distal-end-side portion of the outer peripheral part and the external air which is greater than an area of contact between a remaining portion of the outer peripheral part and the external air, or ii) the piping comprises an annular ejecting portion formed between an inner pipe and an outer pipe, the inner space of the inner pipe is the disposal passage through which liquid hydrogen flows, and the annular ejecting portion is configured to eject hydrogen gas at a distal end of the outer peripheral part of the piping.

According to the configuration of alternative i), the area of contact between the distal-end-side portion of the outer peripheral part and the external air is greater than the area of contact between the remaining portion of the outer peripheral part and the external air. For this reason, radiation of cold energy is accelerated at the distal-end-side portion of the outer peripheral part. Consequently, the temperature of the distal-end-side portion of the outer peripheral part is kept sufficiently higher than the freezing points of nitrogen and oxygen, which are constituents of air. Therefore, there is not a risk of solidification of air that has come into contact with the distal-end-side portion of the outer peripheral part. This consequently makes it possible to suppress blocking of the distal end and its vicinity of the piping by solid air.

In the above ship, the piping may include: an inner pipe, in which the liquid hydrogen flows; and an outer pipe for forming a vacuum layer in a gap that is formed between the inner pipe and the outer pipe in a radial direction. According to this configuration, the piping includes the inner pipe, in which the liquid hydrogen flows, and the outer pipe for forming the vacuum layer in the gap that is formed between the inner pipe and the outer pipe in the radial direction. For this reason, the inner pipe and the outer pipe are vacuum-insulated from each other. Therefore, there is not a risk that part of the liquid hydrogen flowing in the piping is heated to vaporize. This makes it possible to suppress the fluid inside the piping from turning into a gas-liquid two-phase flow.

In the above ship, the piping may include: an inner pipe, in which the liquid hydrogen flows; and an outer pipe for forming a gas encapsulating layer in a gap that is formed between the inner pipe and the outer pipe in a radial direction. A gas having a freezing point higher than a boiling point of hydrogen may be encapsulated in the gas encapsulating layer. According to this configuration, since the piping includes the inner pipe, in which the liquid hydrogen flows, and the outer pipe for forming the gas encapsulating layer in the gap that is formed between the inner pipe and the outer pipe in the radial direction, the gas in the gas encapsulating layer is solidified due to liquid air flowing in the piping, and the inside of the gas encapsulating layer becomes a pseudo vacuum state (i.e., a state where the degree of vacuum in the gas encapsulating layer is higher than in the atmosphere). Therefore, there is not a risk that part of the liquid hydrogen flowing in the piping is heated to vaporize. This makes it possible to suppress the fluid inside the piping from turning into a gas-liquid two-phase flow. In addition, this configuration does not require labor hours for forming a vacuum layer in the gap that is formed between the inner pipe and the outer pipe in the radial direction.

In the above ship, for example, the distal-end-side portion of the outer peripheral part includes a plurality of fins extending radially, or is configured to be bellows-shaped.

The configuration defined by alternative ii) includes the ejecting portion configured to eject the hydrogen gas at the distal end of the outer peripheral part of the piping. Accordingly, air is eliminated from a region to which the hydrogen gas has been ejected. That is, this region becomes a hydrogen atmosphere. Accordingly, there is not a risk of the air being solidified in this region. This consequently makes it possible to suppress blocking of the distal end and its vicinity of the piping by solid air.

The above ship may include a hydrogen supply line configured to vaporize the liquid hydrogen stored in the tank and supply the vaporized liquid hydrogen to the ejecting portion. According to this configuration, the ship includes the hydrogen supply line configured to vaporize the liquid hydrogen stored in the tank and supply the vaporized liquid hydrogen to the ejecting portion. Therefore, the configuration of the ship can be simplified.

### Advantageous Effects of Invention

The present invention makes it possible to, in a ship including piping for disposing of liquid hydrogen over the ocean, suppress blocking of the distal end of the outer peripheral part of the piping by solid air.

### Brief Description of Drawings

Fig. 1 is a perspective view of a liquid hydrogen carrier according to Embodiment 1 of the present invention.
Fig. 2 illustrates a transfer system.
Fig. 3 is a perspective view of an essential part of piping.
Fig. 4 is a front view of the piping.
Fig. 5 is a sectional view taken along line V-V of Fig. 4.
Fig. 6 is a view according to a variation of Embodiment 1, the view corresponding to Fig. 5.
Fig. 7 is a view showing a state before liquid hydrogen is ejected according to Embodiment 2, the view corresponding to Fig. 5.
Fig. 8 is a view showing a state after the liquid hydrogen is ejected according to Embodiment 2, the view corresponding to Fig. 5.
Fig. 9 is a view according to Embodiment 3, the view corresponding to Fig. 2.
Fig. 10 is a view according to Embodiment 3, the view corresponding to Fig. 3.
Fig. 11 is a view according to Embodiment 3, the view corresponding to Fig. 5.

### Description of Embodiments

Hereinafter, a ship according to the present invention is described based on embodiments. The description below is given by taking, as an example, a case where the present invention is applied to a spherical-tank liquid hydrogen carrier 1.

### Embodiment 1

First, an overall structure of the liquid hydrogen carrier 1 is described.

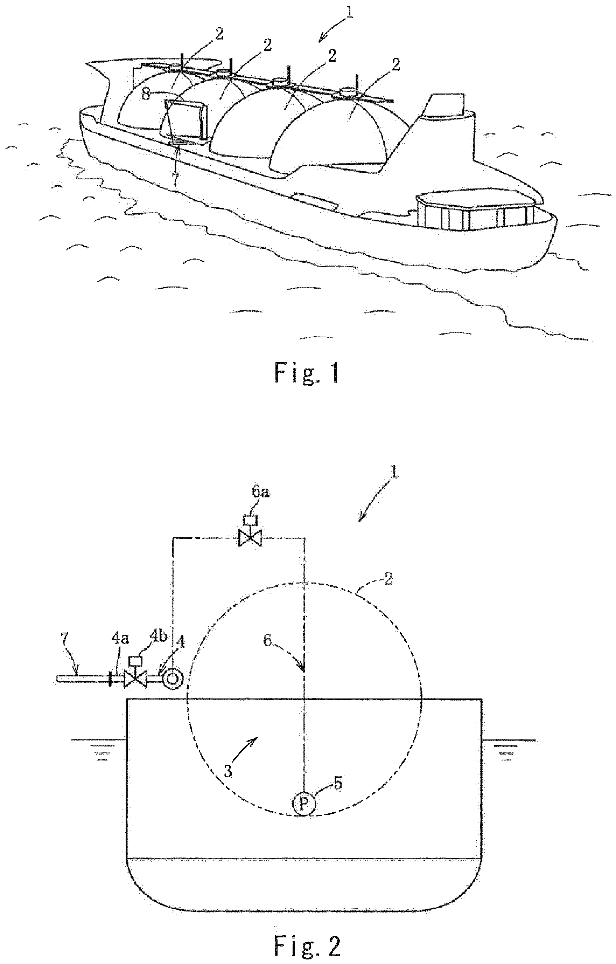

Fig. 1 shows the overall structure of the liquid hydrogen carrier 1 according to Embodiment 1. Fig. 1 shows an emergency state where there is a risk of, for example, stranding or flooding of the liquid hydrogen carrier 1.

As shown in Fig. 1, the liquid hydrogen carrier 1 is a ship for transporting liquid hydrogen stored in spherical tanks 2 from a loading base (not shown) to an unloading base (not shown). The liquid hydrogen carrier 1 of the present embodiment includes four spherical tanks 2.

As shown in Fig. 2, the liquid hydrogen carrier 1 includes a transfer system 3 for transferring the liquid hydrogen between a base-side tank (not shown) and the spherical tanks 2.

The transfer system 3 includes: a manifold 4 installed on the outside of the spherical tanks 2; a plurality of cargo pumps 5, each of which is installed near the inner bottom surface of a corresponding one of the plurality of spherical tanks 2; and a plurality of sets of transfer piping 6, each of which connects between the manifold 4 and a corresponding one of the plurality of cargo pumps 5. The manifold 4 includes: a ship-side coupling 4a connectable to a loading arm (not shown); and an open/close valve 4b. Each set of transfer piping 6 includes an open/close valve 6a.

In the case of loading the liquid hydrogen into a spherical tank 2 at the loading base, a land-side coupling of the loading arm is connected to the ship-side coupling 4a, and the open/close valves 4b and 6a are switched from a closed state into an open state. Thereafter, the liquid hydrogen is transferred from the loading base into the spherical tank 2 via the loading arm, the manifold 4, and the transfer piping 6.

In the case of unloading the liquid hydrogen from the spherical tank 2 at the unloading base, the land-side coupling of the loading arm is connected to the ship-side coupling 4a, and the open/close valves 4b and 6a are switched from a closed state into an open state. Thereafter, the liquid hydrogen sucked up by the cargo pump 5 is transferred to the unloading base via the transfer piping 6, the manifold 4, and the loading arm.

When there is a risk of, for example, stranding or flooding of the liquid hydrogen carrier 1, it is sometimes the case that the liquid hydrogen in the spherical tanks 2 is disposed of over the ocean. For this reason, as shown in Fig. 1, the liquid hydrogen carrier 1 includes piping 7 for disposing of the liquid hydrogen stored in the spherical tanks 2 over the ocean. The piping 7 is attached to the ship-side coupling 4a of the manifold 4, and is supported by an on-board crane 8, such that the piping 7 is kept substantially horizontal.

In the case of disposing of the liquid hydrogen over the ocean, the piping 7 is attached to the ship-side coupling 4a, and the open/close valves 4b and 6a are switched from a closed state into an open state. Thereafter, the liquid hydrogen sucked up by the cargo pump 5 is transferred via the transfer piping 6, the manifold 4, and the piping 7 to be disposed over the ocean. It should be noted that the piping 7 is attached to the ship-side coupling 4a only when an emergency has occurred. In normal times, the piping 7 is accommodated in the liquid hydrogen carrier 1.

Hereinafter, the piping 7 of the present embodiment is described in detail.

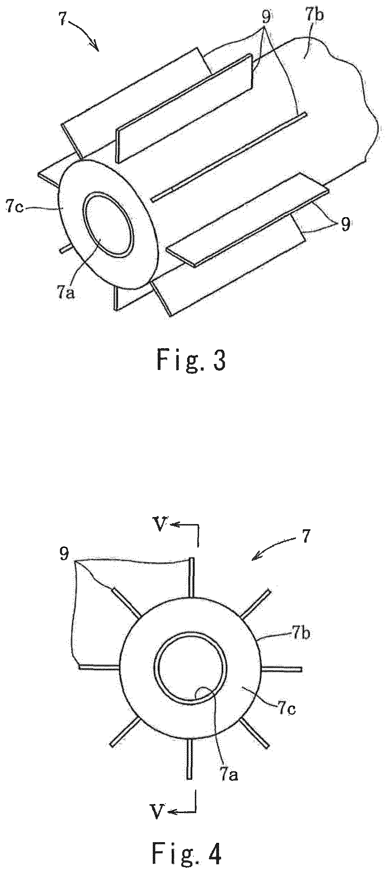

As shown in Fig. 3 to Fig. 5, the piping 7 has a vacuum double structure.

The piping 7 includes: a cylindrical inner pipe 7a; a cylindrical outer pipe 7b fitted outside the inner pipe 7a such that a predetermined gap is formed between the inner pipe 7a and the outer pipe 7b; an annular wall 7c, which blocks between the distal end of the inner pipe 7a and the distal end of the outer pipe 7b; and a flange 7d, which blocks between the proximal end of the inner pipe 7a and the proximal end of the outer pipe 7b.

The inner space of the inner pipe 7a is a disposal passage 7e, through which the liquid hydrogen flows.

A vacuum layer 7f is formed in an annular space that is surrounded by the inner pipe 7a, the outer pipe 7b, the annular wall 7c, and the flange 7d in an air-tight manner. The flange 7d is configured to be connectable to the ship-side coupling 4a of the manifold 4. A vacuum layer corresponding to the vacuum layer 7f is formed in a part of the ship-side coupling 4a, the part being in proximity to the connection between the ship-side coupling 4a and the flange 7d.

On a distal-end-side portion of the outer peripheral part of the outer pipe 7b, the distal-end-side portion having a predetermined length, a plurality of (e.g., eight) fins 9 are formed, which extend radially from the outer peripheral part. These eight fins 9 are arranged at regular intervals in the circumferential direction of the outer pipe 7b. Each fin 9 is formed such that it extends from a position near the distal end of the outer pipe 7b toward the proximal end side substantially in parallel to the central axial direction of the piping 7.

Next, functions and advantages of the liquid hydrogen carrier 1 according to the present embodiment are described.

While the liquid hydrogen is being disposed of through the disposal piping 7, the distal end of the outer peripheral part of the piping 7 is cooled down by the liquid hydrogen flowing therein. Since the plurality of fins 9 are formed on the distal-end-side portion of the outer peripheral part of the outer pipe 7b, the area of contact (per unit length) between the distal-end-side portion of the outer peripheral part of the outer pipe 7b and the external air is greater than the area of contact (per unit length) between the remaining portion of the outer peripheral part of the outer pipe 7b and the external air. For this reason, radiation of heat from the piping 7 to the external air is accelerated at the distal-end-side portion of the outer peripheral part of the outer pipe 7b. Consequently, the distal-end-side portion of the outer peripheral part of the outer pipe 7b will not be cooled down to near the temperature of the liquid hydrogen flowing therein, and the temperature of the distal-end-side portion is kept sufficiently higher than the freezing points of nitrogen and oxygen, which are constituents of the atmosphere. It should be noted that, under atmospheric conditions, the temperature of liquid hydrogen is -253°C, and the freezing points of nitrogen and oxygen are -210°C and -216°C, respectively. Therefore, at the distal-end-side portion of the outer peripheral part of the outer pipe 7b, there is not a risk of the external air being cooled down to be solidified. This consequently makes it possible to suppress blocking of the distal end and its vicinity of the piping 7 by solid air.

Moreover, since the piping 7 has a vacuum double structure, there is not a risk that part of the liquid hydrogen flowing in the piping 7 is heated to vaporize. This makes it possible to suppress the fluid inside the piping 7 from turning into a gas-liquid two-phase flow.

Hereinafter, variations in which the present embodiment is partly modified are described.

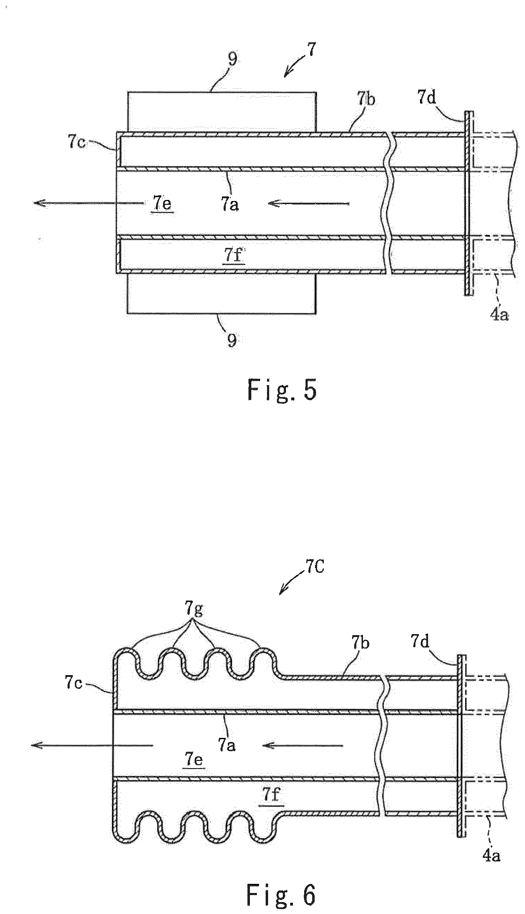

As shown in piping 7C illustrated in Fig. 6, instead of the fins 9, a bellows-shaped bellows portion 7g may be formed on the distal-end-side portion of the outer pipe 7b, the distal-end-side portion having the predetermined length. According to this configuration, compared to the smooth surface portion of the outer peripheral part excluding the bellows portion 7g (in other words, compared to the cylindrical portion having a constant diameter), the bellows portion 7g has a greater area of contact with the external air. For this reason, radiation of heat from the outer pipe 7b to the external air is accelerated by the bellows portion 7g. Therefore, the same advantageous effects as those obtained in the case where the outer pipe 7b is provided with the fins 9 can be obtained.

As another variation, instead of the fins 9, an expanded diameter portion whose diameter expands toward the distal end side from the proximal end side may be formed on the distal-end-side portion of the outer pipe 7b, the distal-end-side portion having the predetermined length. Also in this case, compared to the smooth surface portion of the outer peripheral part excluding the expanded diameter portion, the expanded diameter portion has a greater area of contact with the external air. For this reason, radiation of heat from the outer pipe 7b to the external air is accelerated by the expanded diameter portion. Therefore, the same advantageous effects as those obtained in the case where the outer pipe 7b is provided with the fins 9 can be obtained. Desirably, the piping 7 has a vacuum double structure. However, as an alternative, the piping 7 may be configured to have a single-pipe structure.

### Embodiment 2

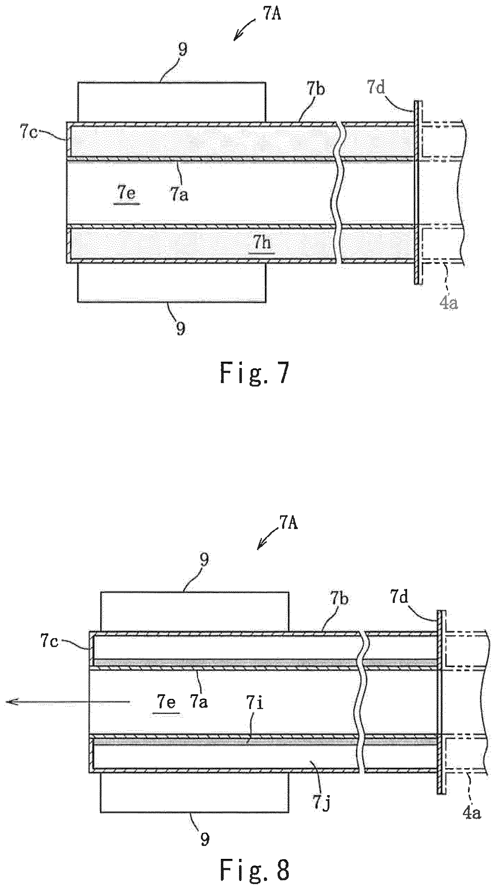

Next, a liquid hydrogen carrier 1A according to Embodiment 2 is described with reference to Fig. 7 and Fig. 8.

The liquid hydrogen carrier 1A according to the present embodiment has the same configuration as that of the liquid hydrogen carrier 1 according to Embodiment 1, except that the liquid hydrogen carrier 1A includes disposal piping 7A. In Embodiment 2, the same components as those of the liquid hydrogen carrier 1 are denoted by the same reference signs as those used for the liquid hydrogen carrier 1, and the description of such components is omitted. The description below mainly describes differences from the liquid hydrogen carrier 1.

As shown in Fig. 7, instead of the vacuum layer 7f, a gas encapsulating layer 7h filled with nitrogen gas is formed in an annular space of the piping 7A, the annular space being surrounded by the inner pipe 7a, the outer pipe 7b, the annular wall 7c, and the flange 7d.

The freezing point of nitrogen gas is -210°C, whcih is higher than the boiling point (-253°C) of hydrogen.

Accordingly, when the liquid hydrogen flows through the disposal passage 7e as shown in Fig. 8, the nitrogen gas encapsulated in the gas encapsulating layer 7h is solidified due to the coldness of the liquid hydrogen. As a result, a solid nitrogen layer 7i is formed, and at the same time, a pseudo vacuum layer 7j, which is a simple vacuum layer whose degree of vacuum is higher than the atmosphere, is formed between the solid nitrogen layer 7i and the outer pipe 7b.

It should be noted that any gas having a freezing point higher than the boiling point of hydrogen may be used instead of the nitrogen gas. It is desirable to use an inert gas such as nitrogen gas or carbon dioxide.

The liquid hydrogen carrier 1A according to the present embodiment makes it possible to obtain the same advantageous effects as those of the liquid hydrogen carrier 1 according to Embodiment 1. In addition, unlike the liquid hydrogen carrier 1, the liquid hydrogen carrier 1A does not require labor hours for forming the vacuum layer 7f.

### Embodiment 3

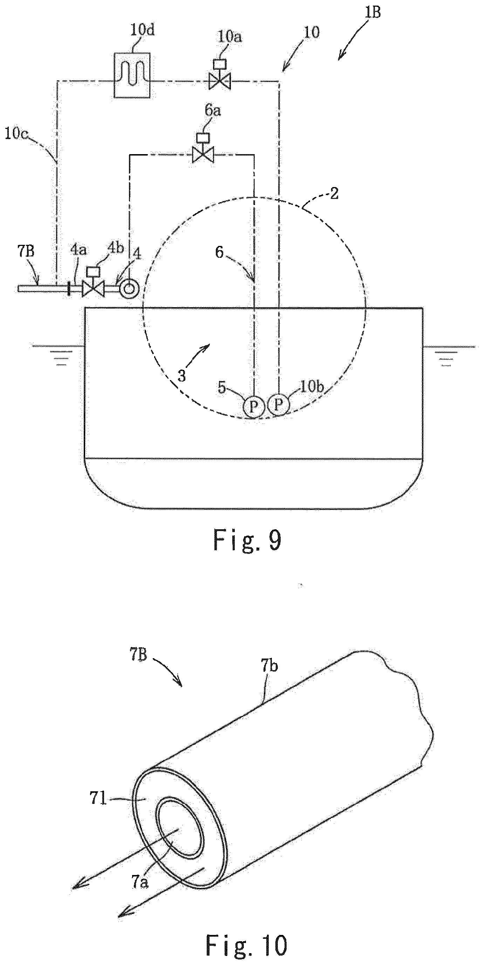

Next, a liquid hydrogen carrier 1B according to Embodiment 3 is described with reference to Fig. 9 to Fig. 11.

The liquid hydrogen carrier 1B according to the present embodiment has almost the same configuration as that described in Embodiment 1 except for some minor details.

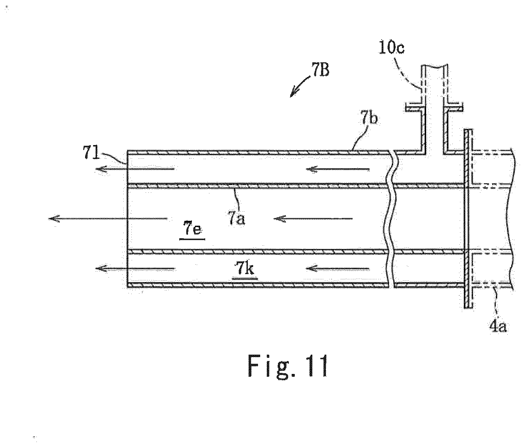

As shown in Fig. 10 and Fig. 11, disposal piping 7B includes the inner pipe 7a, the outer pipe 7b, and the flange 7d, but does not include the annular wall 7c. That is, the gap space formed between the inner pipe 7a and the outer pipe 7b is open at the distal end of the piping 7B. With this configuration, an annular hydrogen gas passage 7k, through which hydrogen gas flows, is formed between the inner pipe 7a and the outer pipe 7b.

An annular ejecting portion 71 for ejecting the hydrogen gas at the distal end of the piping 7B is formed at the distal end of the hydrogen gas passage 7k.

As shown in Fig. 9 and Fig. 11, the liquid hydrogen carrier 1B includes a hydrogen gas supply line 10 for vaporizing the liquid hydrogen stored in the spherical tank 2 and supplying the vaporized liquid hydrogen to the ejecting portion 71. The hydrogen supply line 10 includes an open/close valve 10a, a pump 10b, a coupling 10c, and an evaporator 10d. The open/close valve 10a and the evaporator 10d are disposed outside the spherical tank 2. The pump 10b is disposed inside the spherical tank 2 (at the bottom thereof). The downstream side (the piping 7B side) of the hydrogen supply line 10 is connected to the hydrogen gas passage 7k via the coupling 10c. When the open/close valve 10a is switched from a closed state into an open state, the liquid hydrogen in the spherical tank 2 is sucked up by the pump 10b, and flows into the hydrogen gas supply line 10. The liquid hydrogen vaporizes as a result of passing through the evaporator 10d. The hydrogen gas thus generated is supplied to the ejecting portion 71 through the hydrogen supply line 10 and the hydrogen gas passage 7k. The hydrogen gas is ejected from the ejecting portion 71 at the distal end of the piping 7B.

Hereinafter, functions and advantages of the liquid hydrogen carrier 1B according to the present embodiment are described. While the liquid hydrogen in the spherical tank 2 is being disposed of over the ocean through the piping 7B, the air in a region near the distal end of the piping 7B is eliminated by the hydrogen gas ejected from the ejecting portion 71. That is, this region becomes a hydrogen atmosphere. Therefore, there is not a risk of the air being solidified in this region. This consequently makes it possible to suppress blocking of the distal end and its vicinity of the piping 7B by solid air. In addition, since the liquid hydrogen carrier 1B is configured to vaporize the liquid hydrogen stored in the spherical tank 2 and eject the vaporized liquid hydrogen from the ejecting portion 71, the configuration can be simplified.

Hereinafter, variations in which the present embodiment is partly modified are described. The hydrogen gas supplied to the hydrogen gas supply line 10 may be different from the hydrogen gas stored in the spherical tank 2. Instead of the piping 7B, the piping 7 of Embodiment 1 may be adopted, and the hydrogen gas from the hydrogen gas supply line 10 may be directly ejected at the distal end of the piping 7B.

### Reference Signs List

- 1, 1A, 1B: liquid hydrogen carrier
- 2: spherical tank
- 7, 7A, 7B, 7C: piping
- 7a: inner pipe
- 7b: outer pipe
- 7f: vacuum layer
- 7g: bellows portion
- 7h: gas encapsulating layer
- 7l: ejecting portion
- 9: fin

## Claims

1. A ship (1, 1A, 1B) comprising a tank (2), for storing liquid hydrogen as a cargo,
**characterised in that**
the ship comprises:
a cargo pump (5) installed in the tank; and
piping (7, 7A, 7B, 7C) for transferring the liquid hydrogen sucked up by the cargo pump to a point over the ocean and disposing of the liquid hydrogen over the ocean, wherein
the piping includes an outer peripheral part that contacts external air, and either
i) the piping (7, 7A, 7C) comprises an area of contact between a distal-end-side portion of the outer peripheral part and the external air which is greater than an area of contact between a remaining portion of the outer peripheral part and the external air, or
ii) the piping (7B) comprises an annular ejecting portion (71) formed between an inner pipe (7a) and an outer pipe (7b), the inner space of the inner pipe (7a) is the disposal passage (7e) through which liquid hydrogen flows, and the annular ejecting portion (71) is configured to eject hydrogen gas at a distal end of the outer peripheral part of the piping.

2. The ship (1, 1A) according to claim 1, wherein alternative i) applies and wherein the piping (7, 7A, 7C) includes:
an inner pipe (7a), in which the liquid hydrogen flows; and
an outer pipe (7b) for forming a vacuum layer (7f) in a gap that is formed between the inner pipe and the outer pipe in a radial direction.

3. The ship (1, 1A) according to claim 1, wherein alternative i) applies and wherein the piping (7, 7A, 7C) includes:
an inner pipe (7a), in which the liquid hydrogen flows; and
an outer pipe (7b) for forming a gas encapsulating layer (7h) in a gap that is formed between the inner pipe and the outer pipe in a radial direction, and
a gas having a freezing point higher than a boiling point of hydrogen is encapsulated in the gas encapsulating layer.

4. The ship (1, 1A) according to claim 1, wherein alternative i) applies and wherein
the distal-end-side portion of the outer peripheral part includes a plurality of fins (9) extending radially, or is configured to be bellows-shaped (7g).

5. The ship (1B) according to claim 1, wherein alternative ii) applies, and the ship further comprising a hydrogen supply line (10) configured to vaporize the liquid hydrogen stored in the tank (2) and supply the vaporized liquid hydrogen to the ejecting portion (71).

## Patentansprüche

1. Schiff (1, 1A, 1B), das einen Tank (2) zum Lagern von Flüssigwasserstoff als eine Ladung umfasst, **dadurch gekennzeichnet, dass** das Schiff umfasst:
eine Ladungspumpe (5), die in dem Tank installiert ist; und
Verrohrung (7, 7A, 7B, 7C) zum Transferieren des Flüssigwasserstoffs, der von der Ladungspumpe zu einem Punkt über dem Ozean angesaugt wird, und Entsorgen des Flüssigwasserstoffs über dem Ozean, wobei die Verrohrung einen äußeren umfänglichen Teil beinhaltet, der Außenluft berührt, und
i) die Verrohrung (7, 7A, 7C) entweder eine Berührungsfläche zwischen einem Distalendseitenabschnitt des äußeren umfänglichen Teils und der Außenluft umfasst, die größer ist als eine Berührungsfläche zwischen dem restlichen Abschnitt des äußeren umfänglichen Teils und der Außenluft, oder
ii) die Verrohrung (7B) einen ringförmigen Ausstoßabschnitt (71) umfasst, der zwischen einem Innenrohr (7a) und einem Außenrohr (7b) gebildet ist, wobei der Innenraum des Innenrohrs (7a) eine Entsorgungspassage (7e) ist, durch die Flüssigwasserstoff fließt, und der ringförmige Ausstoßabschnitt (71) dazu ausgelegt ist, Wasserstoffgas an einem Distalende des äußeren umfänglichen Teils der Verrohrung auszustoßen.

2. Schiff (1, 1A) nach Anspruch 1, wobei die Alternative i) gilt, und wobei die Verrohrung (7, 7A, 7C) beinhaltet:
ein Innenrohr (7a), in dem der Flüssigwasserstoff fließt; und
ein Außenrohr (7b) zum Bilden einer Vakuumschicht (7f) in einem Spalt, der zwischen dem Innenrohr und dem Außenrohr in einer radialen Richtung gebildet ist.

3. Schiff (1, 1A) nach Anspruch 1, wobei die Alternative i) gilt, und wobei die Verrohrung (7, 7A, 7C) beinhaltet:
ein Innenrohr (7a), in dem der Flüssigwasserstoff fließt; und
ein Außenrohr (7b) zum Bilden einer Gaskapselungsschicht (7h) in einem Spalt, der zwischen dem Innenrohr und dem Außenrohr in einer radialen Richtung gebildet ist, und
ein Gas, das einen Gefrierpunkt höher als ein Siedepunkt von Wasserstoff aufweist, in der Gaskapselungsschicht gekapselt ist.

4. Schiff (1, 1A) nach Anspruch 1, wobei die Alternative i) gilt, und wobei der Distalendseitenabschnitt des äußeren umfänglichen Teils eine Vielzahl von Rippen (9), die sich radial erstrecken oder konfiguriert ist, um balgförmig (7g) zu sein, beinhaltet.

5. Schiff (1B) nach Anspruch 1, wobei die Alternative ii) gilt, und das Schiff weiter eine Wasserstoffversorgungsleitung (10) umfasst, die dazu ausgelegt ist, den Flüssigwasserstoff, der in dem Tank (2) gelagert ist, zu zerstäuben und den zerstäubten Flüssigwasserstoff dem Ausstoßabschnitt (71) zuzuführen.

## Revendications

1. Navire (1, 1A, 1B) comprenant un réservoir (2), pour stocker de l'hydrogène liquide comme une cargaison, **caractérisé en ce que** le navire comprend :
une pompe à cargaison (5) installée dans le réservoir ; et
de la tuyauterie (7, 7A, 7B, 7C) pour transférer l'hydrogène liquide aspiré par la pompe à cargaison jusqu'à un point au-dessus de l'océan et évacuer l'hydrogène liquide au-dessus de l'océan, dans lequel la tuyauterie inclut une partie périphérique extérieure qui entre en contact avec de l'air externe, et soit
i) la tuyauterie (7, 7A, 7C) comprend une zone de contact entre une partie côté extrémité distale de la partie périphérique extérieure et l'air externe qui est supérieure à une zone de contact entre une partie restante de la partie périphérique extérieure et l'air externe, ou
ii) la tuyauterie (7B) comprend une partie d'éjection annulaire (71) formée entre un tuyau intérieur (7a) et un tuyau extérieur (7b), l'espace intérieur du tuyau intérieur (7a) est le passage d'évacuation (7e) à travers lequel l'hydrogène liquide s'écoule, et la partie d'éjection annulaire (71) est configurée pour éjecter du gaz d'hydrogène à une extrémité distale de la partie périphérique extérieure de la tuyauterie.

2. Navire (1, 1 A) selon la revendication 1, dans lequel l'alternative i) s'applique et dans lequel la tuyauterie (7, 7A, 7C) inclut :
un tuyau intérieur (7a), dans lequel l'hydrogène liquide s'écoule ; et
un tuyau extérieur (7b) pour former une couche sous vide (7f) dans un espace qui est formé entre le tuyau intérieur et le tuyau extérieur dans une direction radiale.

3. Navire (1, 1A) selon la revendication 1, dans lequel l'alternative i) s'applique et dans lequel la tuyauterie (7, 7A, 7C) inclut :
un tuyau intérieur (7a), dans lequel l'hydrogène liquide s'écoule ; et
un tuyau extérieur (7b) pour former une couche d'encapsulation de gaz (7h) dans un espace qui est formé entre le tuyau intérieur et le tuyau extérieur dans une direction radiale, et
un gaz présentant un point de congélation supérieur à un point d'ébullition de l'hydrogène est encapsulé dans la couche d'encapsulation de gaz.

4. Navire (1, 1 A) selon la revendication 1, dans lequel l'alternative i) s'applique et dans lequel la partie côté extrémité distale de la partie périphérique extérieure inclut une pluralité d'ailettes (9)
s'étendant radialement, ou est configuré pour être en forme de soufflet (7g).

5. Navire (1B) selon la revendication 1, dans lequel l'alternative ii) s'applique, et le navire comprenant en outre une conduite d'alimentation en hydrogène (10) configurée pour vaporiser l'hydrogène liquide stocké dans le réservoir (2) et fournir l'hydrogène liquide vaporisé à la partie d'éjection (71).
